Europäisches Patentamt

European Patent Office

Office européen des brevets

(19)

(11) Numéro de publication: **0 043 743**
**B1**

(12) **FASCICULE DE BREVET EUROPEEN**

(45) Date de publication du fascicule du brevet:
27.03.85

(51) Int. Cl.⁴: **C 08 L 23/04, C 08 L 23/16, C 08 J 5/18**

(21) Numéro de dépôt: 81400838.9

(22) Date de dépôt: 26.05.81

(54) Compositions de polyéthylène radicalaire et de copolymères éthylène/propylène pour la fabrication de films.

(30) Priorité: 25.06.80 FR 8014062

(43) Date de publication de la demande:
13.01.82 Bulletin 82/2

(45) Mention de la délivrance du brevet:
27.03.85 Bulletin 85/13

(84) Etats contractants désignés:
AT BE CH DE GB IT LI LU NL SE

(56) Documents cités:
EP - A - 0 006 110
FR - A - 2 368 416
FR - A - 2 405 972
US - A - 4 110 414
US - A - 4 123 417

(73) Titulaire: **Société Chimique des Charbonnages, Tour Aurore Place des Reflets Cédex no 5, F-92080 Paris la Défense 2 (FR)**

(72) Inventeur: **Haas, Armand, 7, Parc Mercier, F-62670 Mazingarbe (FR)**
Inventeur: **Raviola, Florent, Lotissement du Bois des Montagnes Parcelle 22, Vaudricourt F-62131 Verquin (FR)**

(74) Mandataire: **Dubost, Thierry, SOCIETE CHIMIQUE DES CHARBONNAGES Service Propriété Industrielle B.P. 57, F-62670 Mazingarbe (FR)**

**0 043 743**

## Description

La présente invention a pour objet des compositions de polyéthylène radicalaire et de copolymères éthylène-propylène ainsi que des films obtenus à partir desdites compositions.

On connait déjà des compositions de polyéthylène radicalaire (obtenu par le procédé haute pression) et de copolymères d'éthylène (obtenus par le procédé basse pression). Par exemple la demande de brevet européen publiée sous le N° 6110 décrit des films, d'épaisseur comprise entre 2,5 et 150 μm, extrudés à partir de compositions comprenant de 1 à 20% en poids de polyéthylène radicalaire d'indice de fluidité compris entre 0,2 et 5 et de 80 à 99% en poids d'un copolymère éthylène/α-oléfine de densité 0,915 à 0,940 et d'indice de polydispersité (défini par le rapport Mw/Mn de la masse moléculaire moyenne en poids à la masse moléculaire moyenne en nombre) compris entre 2,7 et 4,1.

On connait également des films extrudés à partir de polyéthylène radicalaire et dont l'épaisseur est généralement au moins égale à 25 microns.

De manière surprenante, on a trouvé selon la présente invention des copolymères éthylène-propylène qui, en mélange avec le polyéthylène radicalaire, permettent la fabrication de films d'épaisseur inférieure ou égale à 20 microns et de propriétés améliorées par rapport à au moins l'un des constituants du mélange.

Un premier objet de la présente invention consiste donc en une composition comprenant de 5 à 70% en poids d'au moins un polymère radicalaire d'éthylène de densité comprise entre 0,91 et 0,94 et d'indice de fluidité compris entre 0,2 et 5 dg/min et de 30 à 95% en poids d'au moins un copolymère d'éthylène et d'α-olèfine, caractérisée en ce que ledit copolymère est un copolymère éthylène-propylène de densité $\rho$ comprise entre 0,900 et 0,935, d'indice de fluidité compris entre 0,4 et 3 dg/min, d'indice de poly-disperoité compris entre 6 et 14 et dont le taux m de groupes méthyles compris entre 22 et 62 pour 1000 atomes de carbone est tel que:

$$0,9530 \le \rho + 0,83 \, m \le 0,9568$$

Par polymère radicalaire d'éthylène au sens de la présente invention on entend un produit obtenu par polymérisation sous haute pression (généralement 1000 à 4000 bars) et à haute température (140° à 350°C), en présence d'un initiateur de radicaux libres (tel que l'oxygène, les peroxydes ou les peresters), de l'éthylène et éventuellement de faibles quantités d'au moins un monomère copolymérisable avec l'éthylène tel que par exemple l'oxyde de carbone, les acides carboxyliques éthyléniquement insaturés, les esters dérivés desdits acides et d'un alcool ayant de 1 à 8 atomes de carbone, l'anhydride maléique, l'acétate de vinyle, etc.

Les copolymères éthylène-propylène utilisés dans les compositions selon l'invention sont obtenus par copolymérisation de l'éthylène et du propylène, sous une pression de 300 à 2500 bars et à une température de 180 à 320°C, en présence d'un système catalytique de type Ziegler comprenant d'une part un activateur organométallique (hydrure ou dérivé alkylé d'un métal des groupes I à III de la Classification Périodique) et d'autre part un composé halogéné de métal de transition éventuellement supporté sur un composé anhydre de magnésium ou de manganèse, de manière telle que le flux alimentant le réacteur en régime stationnaire soit constitué de 60 à 85% en poids d'éthylène et de 15 à 40% en poids de propylène. Les copolymères ainsi obtenus ont généralement une masse moléculaire Mn comprise entre 10 000 et 28 000.

Les deux types de polymères entrant comme constituants dans les compositions selon l'invention sont très facilement miscibles pour former des mélanges homogènes. Les compositions selon l'invention peuvent donc être préparées sans difficultés par l'une quelconque des techniques de mélange des polymères, notamment le mélange des granulés à l'état solide à température ambiante et le mélange à l'état fondu sous l'effet de la chaleur.

Les compositions selon l'invention permettent la fabrication, par la méthode d'extrusion-soufflage, de films d'épaisseur inférieure ou égale à 20 microns, c'est-à-dire inférieure à celle des films de polyéthylène radicalaire, ayant des propriétés intéressantes. Ces films se distinguent en effet par une résistance à l'impact remarquable et par une clarté optique améliorée. Bien entendu il est également possible de fabriquer, grâce aux copolymères selon l'invention, des films d'épaisseur supérieure à 20 microns et pouvant atteindre jusqu'à 80 microns. De tels films présentent de bonnes propriétés dynamométriques ainsi que de résistance au déchirement et à l'impact.

Les films obtenus à partir des compositions selon l'invention trouvent de nombreuses applications dans l'industrie de l'emballage ainsi que pour la confection de couches pour bébés.

Les exemples suivant sont donnés à titre illustratif et non limitatif.


## Exemples 1 à 3

On prépare un copolymère de masse volumique 0,903 g/cm³ et d'indice de fluidité 3 dg/min (mesuré selon la norme ASTM D 1238-73) en copolymérisant l'éthylène et le propylène dans un réacteur maintenu sous pression de 1000 bars et à une température de 250°C, au moyen d'un système catalyti-

2

que comprenant du trioctylaluminium comme activateur et un composé de formule $TiCl_3$, $^1/_3$ $AlCl_3$, 6 $MgCl_2$ comme catalyseur, en quantités respectives telles que le rapport atomique Al/Ti soit égal à 3, la composition du flux d'alimentation du réacteur en régime stationnaire étant de 62% en poids d'éthylène et 38% en poids de propylène. Le taux de groupes méthyles de ce copolymère est de 60 pour 1000 atomes de carbone.

On considère d'autre part un homopolymère d'éthylène de masse volumique 0,923 $g/cm^3$ et d'indice de fluidité 2 dg/min obtenus par polymérisation sous une pression de 1500 bars et à une température de 240"C en présence d'un peroxyde initiateur de radicaux libres. On considère enfin un mélange à parties égales de ce polymère radicalaire et du copolymère préparé comme indiqué ci-dessus, ce mélange ayant une masse volumique de 0,913 $g/cm^3$ et un indice de fluidité 2,5 dg/min.

On extrude le copolymère (exemple 1 comparatif), le polymère radicalaire (exemple 2 comparatif) et leur mélange (exemple 3 selon l'invention) en films en recherchant la limite d'étirabilité industrielle, c'est-à-dire l'épaisseur la plus faible qui permette de maintenir une fabrication continue sans rupture de la gaine de film pendant une durée de 2 heures. Puis on mesure sur les films obtenus d'une part des propriétés mécaniques telles que la résistance à l'impact exprimée en $g/\mu m$ (selon la norme ASTM D 1709-67) et d'autre part des propriétés optiques telles que la clarté et la brillance exprimées en pourcentage (selon respectivement les normes E 2412 et E 2431). Les valeurs de ces différentes propriétés sont indiquées dans le tableau I ci-après.

Tableau I

| Exemple | Etirabilité industrielle ($\mu m$) | Résistance à l'impact | Clarté (%) | Brillance (%) |
|---|---|---|---|---|
| 1 | 8 | 1,95 | 31 | 65 |
| 2 | 25 | 1,90 | 62 | 90 |
| 3 | 17 | 2,60 | 40 | 81 |

Exemples 4 à 6

On prépare un copolymère de masse volumique 0,925 $g/cm^3$ et d'indice de fluidité 1,4 dg/min (selon norme ASTM D 1238-73) en copolymérisant l'éthylène et le propylène dans un réacteur maintenu sous pression de 800 bars et à une température de 230"C, au moyen d'un système catalytique comprenant du diméthyléthyldiéthysiloxalane comme activateur et un composé de formule $TiCl_3$, $^1/_3$ $ACl_3$, 6 $MgCl_2$ comme catalyseur, en quantités respectives telles que le rapport atomique Al/Ti soit égal à 3, la composition du flux d'alimentation du réacteur en régime stationnaire étant de 78% en poids d'éthylène et 22% en poids de propylène.

Le copolymère ainsi obtenu a une masse moléculaire Mn égale à 21 000, un indice de polydispersité Mw/Mn égal à 6,2 et possède 35 groupes méthyles pour 1000 atomes de carbone dans la molécule.

On considère d'autre part un homopolymère radicalaire de l'éthylène de masse volumique 0,919 $g/m^3$ et d'indice de fluidité 3,8 dg/min, obtenu par polymérisation sous une pression de 1900 bars et à une température de 260"C en présence d'un peroxyde initiateur de radicaux libres.

On fabrique à partir du copolymère (exemple 4) et de l'homopolymère (exemple 5) décrits ci-dessus, ainsi qu'à partir d'un mélange effectué à l'état fondu de 75% du copolymère et de 25% en poids de l'homopolymère (exemple 6), des films tubulaires d'épaisseur 50 $\mu m$ par extrusion-soufflage avec un taux de gonflage égal à 3. Sur les films ainsi obtenus on mesure les propriétés suivantes:

— la résistance à la rupture dans le sens longitudinal RRL (exprimée en $kg/cm^2$), déterminée selon la norme ASTM D 882-67;
— la résistance à l'impact RI (exprimée en $g/\mu m$), déterminée selon la norme ASTM D 1709-67;
— les propriétés optiques de clarté C et de trouble T (exprimés en %), déterminées respectivement selon les normes E 2412 et E 2421.

On mesure d'autre part l'étirabilité industrielle EI (exprimée en microns), définie comme l'épaisseur de film permettant une fabrication continue par extrusion-soufflage pendant une durée de 2 heures sans perturbations. Les valeurs de ces différentes propriétés figurent au tableau II ci-après.

Tableau II

| Exemple | RRL | RI | C | T | EI (μm) |
|---------|-----|-----|-----|----|---------|
| 4 | 164 | 76 | 29 | 23 | 7 |
| 5 | 131 | 78 | 40 | 12 | 30 |
| 6 | 153 | 105 | 5,5 | 25 | 7 |

## Revendications

1. Composition comprenant de 5 à 70% en poids d'au moins un polymère radicalaire d'éthylène de densité comprise entre 0,91 et 0,94 et d'indice de fluidité compris entre 0,2 et 5 dg/min et de 30 à 95% en poids d'au moins un copolymère d'éthylène et d'$\alpha$-oléfine, caractérisée en ce que ledit copolymère est un copolymère éthylène-propylène de densité $\rho$ comprise entre 0,900 et 0,935, d'indice de polydispersité compris entre 6 et 14, d'indice de fluidité compris entre 0,4 et 3 dg/min et dont le taux m de groupes méthyles compris entre 22 et 62 pour 1000 atomes de carbone est tel que:

$$0,9530 \leq \rho + 0,83\,m \leq 0,9568.$$

2. Composition selon la revendication 1, caractérisée en ce que le polymère radicalaire d'éthylène est un copolymère d'éthylène et d'au moins un comonomère choisi parmi l'oxyde de carbone, les acides carboxyliques éthyléniquement insaturés, les esters dérivés desdits acides et d'un alcool ayant de 1 à 8 atomes de carbones, l'anhydride maléique et l'acétate de vinyle.

3. Composition selon l'une des revendications 1 à 2, caractérisée en ce que le copolymère éthylène-propylène a une masse moléculaire comprise entre 10 000 et 28 000.

4. Composition selon l'une des revendications 1 à 3, caractérisée en ce que le copolymère éthylène-propylène est obtenu par copolymérisation de l'éthylène et du propylène sous une pression de 300 à 2500 bars et à une température de 180 à 320°C en présence d'un système catalytique de type Ziegler.

5. Film obtenu par extrusion-soufflage de polymère, caractérisé en ce qu'il est obtenu à partir d'une composition selon l'une des revendications 1 à 4.

## Patentansprüche

1. Mischung aus 5—70 Gew.-% mindestens eines Radikal-Polymers von Äthylen mit einer Dichte zwischen 0,91 und 0,94 und einem Fluiditätsindex zwischen 0,2 und 5 dg/min und 30—95 Gew.-% mindestens eines Copolymers aus Äthylen und $\alpha$-Olefin, dadurch gekennzeichnet, daß das Copolymer ein Äthylen-Propylen-Copolymer mit einer Dichte $\rho$ zwischen 0,900 und 0,935 und einem Polydispersitätsindex zwischen 0,4 und 3 dg/min ist, dessen Anteil m an Methylgruppen im Bereich zwischen 22 und 62 pro 1000 Kohlenstoffatome ist, wobei

$$0,9530 \leq \rho + 0,83\,m \leq 0,9568.$$

2. Mischung nach Anspruch 1, dadurch gekennzeichnet, daß das Radikal-Polymer von Äthylen ein Copolymer von Äthylen und mindestens einem aus Kohlenoxid, äthylenisch ungesättigten Carbonsäuren, von diesen Säuren abgeleiteten Estern und einem Alkohol mit 1—8 Kohlenstoffatomen, Maleinsäureanhydrid und Vinylacetat gewähltem Comonomer ist.

3. Mischung nach Anspruch 1 oder 2, dadurch gekennzeichnet, daß das Äthylen-Propylen-Copolymer eine Molmasse im Bereich zwischen 10 000 und 28 000 aufweist.

4. Mischung nach einem der Ansprüche 1 bis 3, dadurch gekennzeichnet, daß das Äthylen-Propylen-Copolymer durch Copolymerisation von Äthylen und Propylen unter einem Druck von 300 bis 2500 bar und bei einer Temperatur von 180° bis 320°C in Gegenwart eines katalytischen Systems vom »Ziegler«-Typ dargestellt wird.

5. Durch Extrusionsblasen eines Polymers gewonnener Film, dadurch gekennzeichnet, daß er aus einer Zusammensetzung nach einem der Ansprüche 1 bis 4 hergestellt wird.

## Claims

1. Compositions comprising from 5 to 70% by weight of at least one radical ethylene polymer, having a density between 0,91 and 0,94 and a melt index between 0,2 and 5 dg/min and from 30 to 95% by weight at least one copolymer of ethylene and of an ᴧ-olefin, characterised in that the said copolymer is an ethylene/propylene copolymer, having a density $\rho$ between 0,900 and 0,935, a melt index between 0,4 and 3 dg/min and a polydispersity index between 6 and 14, the proportion m of methyl groups of which lies between 22 and 62 per 1000 carbon atoms and is such that:

$$0,9530 \leq \rho + 0,83 \text{ m} \leq 0,9568.$$

2. Composition according to claim 1, characterised in that the radical ethylene polymer is a copolymer of ethylene and at least one comonomer selected from carbon monoxide, ethylenically unsaturated carboxylic acids, esters derived from said acids and of an alcohol having from 1 to 8 carbon atoms, maleic anhydride and vinyl acetate.

3. Composition according to one of claims 1 to 2, characterised in that the ethylene/propylene copolymer has a molecular weight between 10 000 and 28 000.

4. Composition according to one of claims 1 to 3, characterised in that the ethylene/propylene copolymer is obtained by copolymerizing ethylene and propylene at a pressure of from 300 to 2500 bar and a temperature of from 180 to 320" C in the presence of a Ziegler type catalyst system.

5. Film obtained by blown extrusion of a polymer, characterised in that it is obtained from a composition according to one of claims 1 to 4.